# FASCICULE DE BREVET EUROPEEN

(11) **EP 3 454 118 B1**
(45) Date de publication et mention de la délivrance du brevet: **07.10.2020**
(21) Numéro de dépôt: 18020369.7
(22) Date de dépôt: 06.08.2018
(51) Int. Cl.: G03B 35/02, G03B 21/14

(54) **DISPOSITIF ET PROCÉDÉ POUR RECONSTRUIRE LA SURFACE 3D DU TOUR COMPLET D'UN SUJET**
VORRICHTUNG UND VERFAHREN ZUR REKONSTRUKTION DER 3D-OBERFLÄCHE DER VOLLEN UMDREHUNG EINES SUBJEKTS
DEVICE AND METHOD FOR RECONSTRUCTING THE 3D SURFACE ALL AROUND A SUBJECT

(30) Priorité: 06.09.2017 FR 1770938
(43) Date de publication de la demande: 13.03.2019
(73) Titulaire: QuantifiCare S.A., 06560 Valbonne (FR)
(72) Inventeur: THIRION, Jean-Philippe, 06560 Valbonne (FR)

(56) Documents cités:
- EP-A1- 3 185 106
- JP-A- 2016 220 911
- US-A1- 2015 161 793
- US-B1- 8 462 206
- MARUYA M ET AL: "Texture based 3D shape reconstruction from multiple stereo images", PATTERN RECOGNITION, 1992 . VOL.1. CONFERENCE A: COMPUTER VISION AND A PPLICATIONS, PROCEEDINGS., 11TH IAPR INTERNATIONAL CONFERENCE ON THE HAGUE, NETHERLANDS 30 AUG.-3 SEPT, LOS ALAMITOS, CA, USA,IEEE COMPUT. SOC, US, 30 août 1992 (1992-08-30), pages 137-140, XP010029790, DOI: 10.1109/ICPR.1992.201526 ISBN: 978-0-8186-2910-5

## Description

La présente invention concerne un dispositif et un procédé pour la reconstruction en trois dimensions (3D) du tour complet, à 360°, d'une surface en 3D d'un objet ou d'un corps.

### ARRIÈRE-PLAN TECHNOLOGIQUE

Les applications nécessitant la représentation d'un objet sous des incidences multiples sont nombreuses. Il peut s'agir par exemple de visualiser des objets à distance en vue d'un téléachat. De fait, plusieurs systèmes utilisant une table tournante et basés sur l'acquisition de photographies ou de films classiques ont été proposés, comme par Beniyama et al. dans le brevet US 7,440,691, par Park et al. dans US 7,394,977, ou plus récemment par McGuire et al. dans US 8,462,206.

Dans tous ces cas, un ensemble conséquent de vues de l'objet sont acquises au moyen, soit d'un appareil photographique conventionnel, soit d'une caméra vidéo conventionnelle, d'un sujet placé sur une table tournante. Ces systèmes diffèrent suivant les degrés de liberté du plateau tournant et/ou les possibilités d'orientation et de déplacement de la caméra. Ils diffèrent également par l'interface et la manière dont les photographies sont restituées pour la phase de visualisation. Il ne s'agit pas dans ces brevets de reconstruire la surface d'un objet en trois dimensions, mais de collecter un ensemble de vues qui puisse permettre à un utilisateur de visualiser l'objet a postériori suivant un grand nombre de directions dans l'espace, comme s'il déplaçait l'objet en 3D devant lui, incluant la possibilité également de faire effectuer à volonté un tour complet à cet objet.

Concernant les techniques de reconstruction de surfaces en 3D, la majorité des techniques utilisent un appareil de prise de vue fixe observant un objet fixe. Les techniques de reconstruction 3D se divisent principalement en deux groupes :
- Les techniques dites de stéréovision active, comprenant une caméra vidéo d'un côté et un projecteur de lumière structurée de l'autre : un motif lumineux est ainsi projeté sur le sujet puis ce motif est imagé au moyen de la caméra vidéo et une forme est reconstruite en 3D à partir de l'interprétation de la forme lumineuse projetée et d'hypothèses de continuité de la surface examinée dans la séquence vidéo. La lumière structurée utilisée dans ce cas est très fréquemment un balayage laser ou bien une lumière infra-rouge.
- Les techniques dites de stéréovision passive, dans lesquelles un seul boitier photographique, comportant une optique double, permet de recueillir simultanément deux vues du même modèle avec un angle de prise de vue différent entre les deux vues, ce qui constitue une paire d'images stéréographique appelée « paire stéréo ». Des algorithmes permettent ensuite de reconstruire en 3D une surface de l'objet munie d'une texture d'image associée. Ces algorithmes réalisent une mise en correspondance des deux images de la paire stéréo et, connaissant la différence relative de position et d'orientation entre les deux sous-optiques de l'optique double, permettent de reconstruire une surface 3D par triangulation. Ceci nécessite de connaitre parfaitement les caractéristiques géométriques des deux sous-optiques de l'optique double. Le brevet US 9,621,875 présente un exemple d'appareil de stereo-vision passive et de telles méthodes de reconstruction de surface.

D'autres techniques, distinctes de celles décrites ci-dessus et basées sur le flot optique, existent encore afin de reconstruire un objet en 3D à partir d'une simple séquence vidéo obtenue par une caméra vidéo classique et de la rotation complète de l'objet sur une table tournante. Un exemple de ce type de technologie est présenté par A.W. Fitzgibbon et al. dans «Automatic 3D Model Construction for Turn-Table Sequences », SMILE'98 Proceedings of the European Workshop on 3D Structure from Multiple Images of Large-Scale Environments, Pages 155-170, juin 06 - 07, 1998.

Un avantage de cette dernière technique est de pouvoir disposer non seulement d'une reconstruction en 3D de la surface de l'objet examiné, mais également d'une boucle vidéo complète, à 360°, du sujet - et bien évidement d'utiliser une caméra vidéo classique et non une optique spécifique.

Maruya M et al., « Texture based 3D shape reconstruction from multiple stereo images », p137-140, IEEE Proceedings, 11th IAPR International Conference On Pattern Recognition, The Hague, Netherlands, 1992 et Hasegawa K. et al, JP 2016 220911 A (FUJIFILM CORP), 28 décembre 2016 (2016-12-28) présentent tous deux l'utilisation d'une table tournante et d'un système de stéréovision passive.

Dans le cas de Hasegawa, l'utilisation d'un système de stéréovision couplé à l'utilisation d'une table tournante est proposée afin d'améliorer le contrôle qualité dans l'examen d'objets tels que des plaquettes de médicament, en permettant grâce à l'utilisation de la table tournante d'examiner l'objet suivant plusieurs points de vue, mais Hasegawa ne propose pas une amélioration de l'état de l'art dans la reconstruction en 3D des surfaces de l'objet.

Dans le cas de Maruya, une méthode est proposée afin de reconstruire des morceaux de courbes en deux dimensions pour la ligne centrale de prise de vue supposée parfaitement alignée dans le plan de rotation de l'objet. Un algorithme basé sur la mise en correspondance de textures unidimensionnelles est proposé afin de rabouter les différents morceaux de courbes en une seule courbe 2D. Il est noté dans Maruya le problème non résolu de bouclage de cette courbe reconstruite (dont les deux extrémités ne se rejoignent pas) et indiqué explicitement que cette technique nécessite que la ligne centrale de prise de vue soit parfaitement alignée avec le plan horizontal de la table tournante (c'est à dire parfaitement perpendiculaire à l'axe de rotation de la table tournante), nécessitant de ce fait l'utilisation d'un niveau à bulle.

La technique proposée dans Maruya pour reconstruire une courbe dans un plan n'est pas extensible en trois dimensions à la reconstruction de surfaces 3D complètes à 360° pour des systèmes ne présentant pas une parfaite perpendicularité avec l'axe de rotation du plateau tournant et/ou pour des sujets, comme des corps humains, dont l'orientation par rapport à l'axe verticale de rotation peut changer entre les différentes prises de vues 3D, et enfin il ne résout pas le problème du bouclage de la forme : trois problèmes que notre invention, basée sur la reconstruction et l'utilisation de surfaces 3D, se propose de résoudre.

D'autres techniques enfin ont été développées pour reconstruire une boucle complète à 360° de la surface 3D d'un objet ou d'un corps en utilisant un système de stéréovision active et un plateau tournant. En effet, un avantage de la stéréovision active est de pouvoir procéder par balayage. Un nuage de points représentant la surface est constitué et s'enrichie à chaque balayage nouveau réalisé ; il est donc naturel d'associer ce système de balayage continue avec un dispositif assurant une rotation continue de l'appareil d'acquisition autour du sujet - ou de manière équivalente, la rotation continue du sujet devant l'appareil de stéréovision active.

Un premier exemple est décrit par K. Park dans le brevet US 7,020,325 dans le cas de la reconstruction en 3D de la surface d'une dent. Ce système utilise un balayage laser et une caméra vidéo qui enregistre une séquence d'images du motif lumineux projeté sur l'objet placé sur une table tournante afin de reconstruire sa surface en trois dimensions. Ces idées d'utilisation combinée de la stéréovision active et d'une table tournante sont approfondies par Weber et al. dans le brevet US 8,982,201, permettant l'application à une dentition complète.

Plus récemment et pour le corps, la société Styku, Los Angeles, Californie, USA a développé un système de stéréovision active, le « Bodyscanner » utilisant une table tournante et un appareil de stéréovision active. Le système de stéréovision active utilisé est la Kinect V2 qui est une caméra vidéo utilisant un projecteur et un capteur de lumière infrarouge pour évaluer la profondeur, et ainsi reconstruire des tours à 360° d'objets ou de personnes. Ce type de méthodes s'inscrit dans la lignée des méthodes proposées par Wang et al., « Accurate Full Body Scanning from a Single Fixed 3D Camera », 2012 Second International Conference on 3D Imaging, Modeling, Processing, Visualization & Transmission, 13-15 Oct. 2012, Zurich, Switzerland, utilisant la stereovision active de type « Kynect » et reposant sur des capteurs infrarouge. De façon réciproque, la société Shape Labs Inc., San Franciso, Californie, propose au travers de son système « shapescale » de faire tourner une camera de vision active de type « Kynect » autour du sujet. Dans tous ces exemples, la rotation de la caméra vidéo autour du sujet est continue.

Cependant, que ce soit dans le cas de Fitzgibbon, Park ou Weber ou dans le cas des systèmes « bodyscanner » de Styku, l'utilisation d'une camera vidéo pour recueillir les images limite la résolution des images acquises. En effet, dû au débit d'information important, mais limité, d'une caméra vidéo, la résolution d'image est forcément réduite quand on la compare à celle d'un appareil photographique de haute qualité. Un appareil photographique présente en général, pour une photographie statique, un nombre de pixels dans l'image d'un ordre de grandeur supérieur à celui d'une image de caméra vidéo et une qualité d'image généralement très supérieure. De plus, la projection de motifs lumineux peut perturber la qualité de la texture d'image qui est acquise.

Pour surmonter ce problème de résolution de la caméra vidéo dans le cas d'un système de stéréovision active et si l'on a l'idée d'utiliser en supplément un appareil photographique classique pour ajouter une texture de très haute résolution à un modèle 3D reconstruit, on se heurte au problème de correspondance entre la géométrie de la surface et l'information de texture, car la texture d'image, acquise indépendamment des données vidéos qui servent à reconstruire la surface, peut être décalée par rapport à la surface 3D. Ainsi, ces méthodes de reconstructions 3D utilisant une caméra vidéo et/ou un système de projection de motifs lumineux pour la reconstruction 3D sont limitées en ce qui concerne la qualité et la précision de la texture d'image associée à la surface 3D reconstruite.

Au contraire des systèmes de stéréovision active, les techniques de stéréovision passive reconstruisent en 3D des surfaces d'objets à partir de prises de vues de très haute résolution (paires stéréo) effectuées à l'aide d'un appareil photographique munis d'une optique double et permettent la reconstruction en trois dimensions de la surface d'un objet munie d'une texture associée extrêmement fine. Cette texture d'image bénéficie de tout l'avantage du boitier photographique de haute qualité. De plus, comme les images de très haute résolution de la paire stéréo elle-même sont utilisées pour la reconstruction, la correspondance entre texture et modèle 3D est assurément optimale.

Pour surmonter le fait que, en une prise de vue, un système de stéréovision passive ne permet de reconstruire qu'une partie de la surface de l'objet à cause des « parties cachées », invisibles depuis un seul point de vue, il s'est développé, depuis quelques années, des techniques additionnelles de « couture » de surfaces 3D, encore appelées « stitching » en anglais, qui permettent, à partir des surfaces 3D obtenues à partir de plusieurs paires stéréo correspondant à des vues différentes de l'objet examiné, de reconstruire en 3D une seule représentation de la surface 3D munie d'une texture d'image très détaillée.

Le but de la présente invention est d'adapter un tel système de stéréovision passive et de couture de surfaces 3D à l'utilisation d'une table tournante ou d'un cadre tournant afin de pouvoir reconstruire en 3D la surface d'un tour complet à 360° d'un objet ou d'un corps comportant une texture de très haute résolution.

### RÉSUMÉ DE L'INVENTION

La présente invention présente un dispositif selon la rev. indépendante 1 et un procédé selon la rev. indépendante 8 pour la reconstruction d'une surface 3D d'un tour complet à 360° d'un objet ou d'un corps utilisant un ou plusieurs appareils 3D de stéréovision passive comportant chacun une optique double, et une table tournante, ou de manière équivalente un cadre tournant supportant le ou les appareils 3D, afin de pouvoir prendre des prises de vues stéréographiques 3D de l'objet ou du corps suivant ces angles différents couvrant un tour complet à 360° du sujet, puis de coudre les surfaces 3D des différentes prises de vue en une seule représentation en 3D de la surface de l'objet ou du corps.

Une telle qualité de reconstruction 3D ne peut pas être obtenue avec des prises de vue acquises avec un simple appareil photographique suivant des vues différentes. En effet, même si une reconstruction en 3D peut être tentée à partir de deux vues suivant des angles différents prisent avec un même appareil photographique que l'on a déplacé, ou bien encore avec les vues acquises au moyen de deux appareils photographiques distincts synchronisés, la calibration, c'est-à-dire la connaissance des paramètres de position relative de ces deux appareils ou des deux positions successives du même appareil, sont beaucoup moins précises que l'acquisition d'une paire stéréo avec un seul appareil photographique muni d'un bloc d'optique double. En effet, la précision de mesure des différences entre les deux sous-optiques du bloc constitué par l'optique double peut avoisiner le micron. En comparaison, il sera très difficile avec deux appareils photographiques distincts ou un même appareil photographique se déplaçant de connaitre ces positions relatives au millimètre près. On pourrait dans ce cas avoir l'idée d'adjoindre également des systèmes de métrologie pour mesurer ces positions mais ces systèmes de métrologie sont extrêmement coûteux et délicats à opérer.

A titre d'exemple, les pièces tenant ensemble deux appareils photographiques distincts seront soumises à des changements de dimension dus par exemple à des variations de chaleur ou à l'effet de la pesanteur, qui pourront entrainer très rapidement une incertitude relativement importante concernant les positions et directions relative des deux appareils photographiques qu'elles soutiennent.

L'avantage du dispositif suivant la présente invention est donc de pouvoir combiner l'extrême précision de la surface 3D reconstruite et de la texture d'image associée obtenue à l'aide d'un ou plusieurs appareils de stéréovision passive à optique double et la possibilité d'obtenir un tour complet à 360° du sujet grâce à une table tournante ; le tout utilisant un procédé de couture 3D. En termes de précision, le résultat sera supérieur à celui obtenu en utilisant de simples appareils photographiques ou des caméras vidéo de stéréovision active.

On comprendra que pour la présente invention il sera équivalent d'utiliser une table tournante permettant de faire tourner le sujet devant un ou plusieurs appareils 3D de stéréovision passive ou bien encore de faire tourner un ou plusieurs appareils 3D de stéréovision passive autour du sujet au moyen d'un cadre tournant supportant le ou les appareils 3D. La même équivalence existe entre table tournante ou cadre tournant en ce qui concerne le procédé suivant la présente invention.

### INTRODUCTION DES FIGURES

Les dessins annexés illustrent l'invention :
- La figure 1 présente un dispositif suivant l'invention, utilisant une table tournante.
- La figure 2 présente un dispositif suivant l'invention utilisant un cadre tournant autour du sujet, supportant un appareil 3D.
- La figure 3 présente un procédé suivant l'invention utilisant une table tournante.
- La figure 4 présente un procédé suivant l'invention utilisant un cadre tournant autour du sujet, supportant un appareil 3D.

### DESCRIPTION DÉTAILLÉE

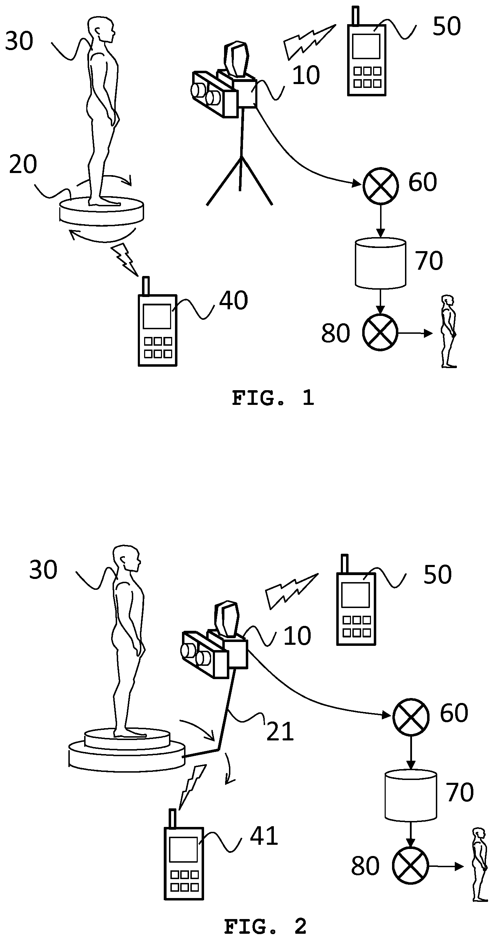

En référence à ces dessins, un dispositif selon l'invention et comprenant une table tournante est présenté dans la figure 1 :
- (10) représente un appareil 3D de stéréovision passive,
- (20) est une table tournante,
- (30) est un objet ou un corps placé sur la table tournante (20), de telle manière que l'objet ou le corps (30) soit placé dans le champ de l'appareil 3D (10),
- (40) est un moyen de contrôle permettant le pilotage de la rotation de la table tournante (20),
- (50) est un moyen de contrôle permettant le déclanchement de la prise de vue de l'appareil 3D (10),
- (60) est un moyen de calcul permettant la reconstruction d'une surface 3D et de sa texture d'image associée à partir d'une paire stéréo issue de l'appareil 3D (10),
- (70) est un moyen de stockage des surfaces 3D et textures associées correspondant aux différentes vues de l'objet ou du corps (30),
- (80) est un moyen de calcul permettant la couture en une seule surface 3D et texture associée d'un tour complet de l'objet ou du corps à partir de plusieurs surfaces 3D et textures associées couvrant un tour complet autour de l'objet ou du corps imagé (30) stockées dans le moyen de stockage (70).

Le moyen de contrôle (40) permettant le pilotage de la table tournante (20) peut être relié à celle-ci par un câble ou par tout autre moyen électronique de communication comme par exemple une transmission d'une onde électromagnétique pouvant être de type infra-rouge, Bluetooth, WIFI ou autre. Ce peut être également un système intégré à la table tournante et synchronisé à une horloge pour adopter des positions données de rotation de la table à des instants donnés.

Le moyen de contrôle (50) permettant le déclanchement de la prise de vue de l'appareil 3D (10) peut être un câble de télécommande du boitier photographique de l'appareil 3D (10) ou tout autre moyen de déclanchement électromagnétique telle que la transmission d'une onde électromagnétique de type infra-rouge, Bluetooth, WIFI ou autre. Ce pourra être également un moyen de déclanchement synchronisé à une horloge pour déclencher des prises de vues stéréo à des instants donnés et qui peut être intégré à l'appareil 3D (10).

Le moyen de stockage des surfaces 3D et des textures associées (70) peut également être intégré directement au moyen de calcul (80) permettant la couture en une seule surface 3D et texture associée du tour complet de l'objet ou du corps, ce qui permet en outre de pouvoir commencer le travail de couture alors que le tour complet n'est pas encore fini d'être réalisé. De même, le moyen de calcul (60) permettant la reconstruction d'une surface 3D et de la texture associée à une seule paire stéréo peut être intégré à l'ensemble des moyens de calculs (80) pour limiter le nombre de moyens de calculs utilisés.

Il pourra être avantageux de combiner le moyen de contrôle (40) de rotation de la table tournante (20) et le moyen de déclenchement (50) de l'appareil 3D (10) en un seul moyen de contrôle commun (40-50) afin de synchroniser parfaitement les angles adoptés par la table tournante (20) et les instants de prise de vues au moyen de l'appareil 3D (10). Il pourra également être avantageux que le moyen de contrôle (40) de la rotation de la table tournante (20) puisse permettre de suspendre la rotation de la table tournante (20) pendant chaque prise de vue afin de réduire le flou de bougé dû à la rotation de la table tournante (20) pendant les prises de vue.

Il pourra enfin être avantageux de combiner les moyens de contrôle (40, 50) et les moyens de calcul et de stockage 60, 70, 80 en un seul appareil de contrôle, de stockage et de calcul, comme par exemple un ordinateur pilotant l'ensemble du dispositif.

On comprendra aisément qu'un dispositif similaire puisse être réalisé en maintenant l'objet ou le corps fixe et en disposant d'un cadre tournant supportant l'appareil 3D afin que ce soit l'appareil 3D qui tourne autour du sujet au lieu que ce soit le sujet qui tourne devant l'appareil 3D. La figure 2 présente cette variante du dispositif suivant l'invention :
- (21) est un cadre tournant autour du sujet et supportant un appareil 3D (10).
- (41) est un moyen de contrôle du cadre tournant (21).

Les autres éléments sont, dans leur ensemble, inchangés. Le dispositif selon la variante de la figure 2 de l'invention peut comporter les mêmes variations que la variante selon la figure 1, à savoir que le moyen de contrôle (50) de l'appareil 3D (10) et le moyen de contrôle (41) du cadre tournant (21) peuvent être reliés à leurs éléments respectifs de manière filaire ou par onde électromagnétique ou encore utiliser une synchronisation grâce à une horloge, et les deux moyens de contrôle (50) et (41) peuvent être fusionnés en un seul (41-50); des pauses peuvent être observées dans la rotation du cadre tournant lors des prises de vue afin de réduire le flou de bougé.

Dans une autre variante selon l'invention, non représentée par une figure, le dispositif peut comprendre des moyens robotisés permettant d'orienter et/ou de déplacer l'appareil 3D (10) au cours du temps et en fonction des prises de vues. Il pourra s'agir par exemple d'un système d'élévation et d'orientation de l'appareil 3D (10) permettant d'acquérir des tours du sujet à différentes hauteurs et de combiner ces différents tours afin de reconstituer en 3D une seule surface représentant un sujet particulièrement allongé dans le sens vertical, comme par exemple une personne se tenant debout.

Dans une autre variante selon l'invention, également non représentée par une figure, le système pourra comporter plusieurs appareils 3D de stéréovision passive. Une disposition avantageuse sera de positionner ces différents appareils verticalement, de telle sorte qu'en effectuant un tour complet du sujet sur une table tournante ou autour du sujet à l'aide d'un cadre tournant, il soit possible d'acquérir simultanément plusieurs tours complets d'un sujet à des hauteurs différentes et de recoudre l'ensemble des surfaces 3D obtenues à partir de toutes ces paires stéréo en une seule surface 3D et texture associée. Une fois de plus, cette variante de l'invention sera particulièrement avantageuse pour un sujet allongé dans le sens vertical comme par exemple une personne se tenant debout.

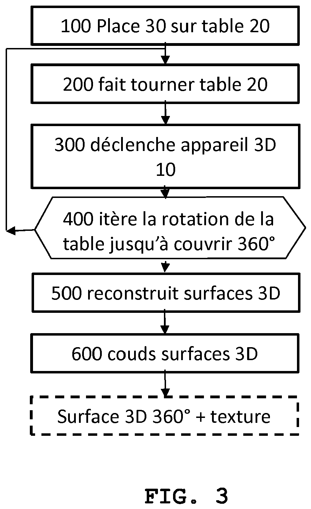

La figure 3 présente un procédé suivant l'invention et utilisant une table tournante pour réaliser le tour à 360° du sujet et comprenant les étapes suivantes :
- (100) positionner un sujet (30) au centre d'une table tournante (20) de tel sorte que le sujet (30) soit dans le champ d'un appareil 3D de stéréovision passive (10) fixe,
- (200) faire tourner la table tournante (20) de manière à adopter un angle relatif donné entre le sujet (30) et l'appareil 3D (10),
- (300) déclencher la prise de vue de l'appareil 3D (10) et stocker la paire stéréo correspondant à cette prise de vue dans un moyen de stockage (70),
- (400) itérer et alterner entre rotation (200) de la table tournante (20) et déclanchement (300) de la prise de vue de l'appareil 3D (10) jusqu'à couvrir 360° autour du sujet,
- (500) reconstruire la surface 3D et la texture associée à chacune des paires stéréo correspondant aux prises de vue réalisées,
- (600) coudre l'ensemble des surfaces 3D et textures associées en une seule surface 3D et texture associée correspondant à la surface d'un tour complet autour du sujet (30).

Une variante du procédé selon l'invention consistera à effectuer l'étape (500) de reconstruction d'une surface 3D et texture associée au sein de la boucle (400), juste après avoir déclenché la prise de vue (300) correspondant à cette paire stéréo ; l'avantage de cette variante est de raccourcir la durée de réalisation de la méthode en effectuant la reconstruction des surfaces en parallèle avec la prise de vue.

De la même manière, il pourra être avantageux de réaliser l'étape de couture des surfaces 3D (600) au fur et à mesure de la génération de chaque surface 3D correspondant à l'acquisition d'une nouvelle paire stéréo. Comme dans le cas du dispositif proposé, la méthode pourra avantageusement utiliser plusieurs appareils 3D au lieu d'un seul et/ou déplacer progressivement l'appareil 3D utilisé afin de réaliser plusieurs tours à différentes hauteurs autour du sujet, ce qui est particulièrement avantageux pour un sujet allongé dans le sens de la hauteur comme une personne.

On comprendra enfin qu'il est également possible de réaliser la méthode suivant l'invention en faisant tourner l'appareil 3D (10) autour du sujet (30) au moyen d'un cadre tournant (21) supportant l'appareil 3D au lieu de faire tourner le sujet (30) devant un appareil 3D (10) fixe au moyen d'une table tournante (20) .

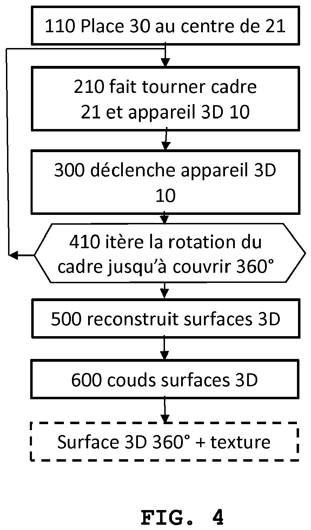

La figure 4 présente une variante du procédé selon l'invention utilisant un cadre tournant (21). La méthode suivant la variante de la figure 4 présente, comme différence avec la variante suivant la figure 3, le fait de commencer par placer (110) le sujet (30) au centre de rotation d'un cadre tournant (21) supportant un appareil 3D de stéréovision passive (10), puis l'étape (210) consiste à positionner le cadre tournant (21) de tel sorte à placer relativement le sujet (30) et l'appareil 3D (10) suivant un angle prédéfini et l'itération (410) consiste à faire tourner le cadre tournant (21) afin de couvrir 360° autour du sujet. Les autres étapes de cette variante de la méthode sont principalement inchangés, et les autres variantes avantageuses consistant à disposer de plusieurs appareils 3D ou de déplacements additionnels de l'appareil 3D (10) afin de réaliser plusieurs tours à plusieurs hauteurs ou bien encore de paralléliser les étapes de reconstruction (500) et de couture (600) de surfaces s'appliquent également de manière évidente.

Le dispositif et le procédé suivant l'invention sont particulièrement destinés à permettre de reconstruire en 3D la surface et la texture associée d'un tour complet à 360° d'un sujet qui peut être un objet ou un corps, avec une très grande précision géométrique pour la surface et une très grande finesse de la texture d'image associée. Ils seront avantageusement utilisés dans le domaine de la chirurgie esthétique afin de reconstruire en 3D des tours complets à 360° de personnes afin d'estimer leur dimension, de suivre l'évolution de ces dimensions au cours du temps ou de simuler des opérations de chirurgie esthétique, notamment en ce qui concerne le reprofilage de corps des personnes imagées.

## Revendications

1. Dispositif permettant la reconstruction en 3D de la surface d'un tour complet à 360° d'un objet ou d'un corps (30) comprenant :
- au moins un appareil 3D de stéréovision passive équipé d'une optique double (10),
- une table tournante (20) sur lequel est placé l'objet ou le corps à imager (30) ou alternativement un cadre (21) tournant autour de l'objet ou du corps à imager (30) sur lequel est attaché le au moins un appareil 3D de stéréovision passive équipé d'une optique double (10), de telle sorte que les positions relatives de l'objet ou du corps (30) et du au moins un appareil 3D (10) soient telles que l'objet ou le corps (30) se trouve dans le champ de prise de vue du au moins un appareil 3D (10),
- un moyen de contrôle (40) de la rotation de la table tournante (20) ou un moyen de contrôle (41) du cadre tournant (21) et un moyen de contrôle du déclanchement des prises de vues (50) permettant de recueillir un ensemble de paires stéréo acquises au moyen du au moins un appareil 3D (10) couvrant dans leur ensemble un angle de 360° autour de l'objet ou du corps (30),
- des moyens de calcul (60) permettant de reconstruire en 3D des morceaux de surfaces à partir des paires stéréo acquises,
**caractérisé par le fait :**
- **que** le moyen de contrôle de rotation (40) de la table tournante (20) ou le moyen de contrôle (41) du cadre tournant (21) observe une pause dans la rotation lors de chacune des prises de vue, et
- **qu'**il comprend des moyens de calcul (80) permettant de recoudre les différents morceaux de surface 3D acquis en mettant en correspondance au moyen de critères géométriques dans l'espace 3D les surfaces 3D reconstruites, en utilisant un algorithme de bouclage pour que la succession des différentes transformations géométriques entre surfaces 3D successives conduisent à l'identité à la fin du tour complet et en ajustant les différentes surfaces en une seule représentation en 3D d'une boucle complète à 360° de la surface de l'objet ou du corps.

2. Dispositif suivant la revendication 1 et **caractérisé par le fait qu'**il comprend une table tournante (20) de telle sorte qu'un objet ou un corps (30) placé sur cette table (20) se trouve dans le champ de prise de vue du au moins un appareil 3D (10) et que les moyens de contrôle (40) permettent de piloter la rotation de la table tournante (20).

3. Dispositif suivant la revendication 1 et **caractérisé par le fait qu'**il comprend un cadre tournant (21) supportant le au moins un appareil 3D de stéréovision passive (10) de telle sorte qu'un objet ou un corps (30) placé au centre de rotation de ce cadre tournant (21) se trouve dans le champ de prise de vue de l'appareil 3D (10) et que les moyens de contrôle (41) permettent de piloter la rotation du cadre tournant (21).

4. Dispositif suivant les revendications 1 à 3, **caractérisé en ce que** le dispositif comprend plusieurs appareils 3D de stéréovision passive équipés chacun d'une optique double (10).

5. Dispositif suivant les revendications 1 à 4 et **caractérisé en ce qu'**il comprend de plus des moyens robotisés pour orienter et/ou de déplacer le au moins un appareil 3D de stéréovision passive (10).

6. Dispositif suivant les revendications 1 à 5 et **caractérisé en ce que** le moyen de contrôle (40) de la table tournante (20) ou le moyen de contrôle (41) du cadre tournant (21) soient synchronisés ou confondus avec le moyen de contrôle pilotant de déclanchement des prises de vue (50) en un seul moyen de contrôle (40-50) ou (41-50) pilotant l'acquisition des paires stéréos suivant différents angles et couvrant un tour complet.

7. Dispositif suivant la revendication 6 et **caractérisé en ce que** le moyen de contrôle permettant le contrôle de l'orientation et de la prise de vue (40-50) ou (41-50) comporte la possibilité de prédéfinir un certain nombre d'angles relatifs de prise de vue du ou des appareils de stéréovision passive (10) et pilote la table tournante (20) ou le cadre tournant (21) afin de, pour chaque angle de prise de vue prédéfini :
- placer relativement l'objet ou le corps (30) par rapport à ou aux appareils 3D de stéréovision passive (10) suivant un des angles prédéfini de prise de vue,
- acquérir le ou les paires stéréo selon cet angle relatif de prise de vue,
- déplacer relativement l'objet ou le corps (30) par rapport à ou aux appareils 3D de stéréovision passive (10) pour adopter une autre position relative,
- et réaliser successivement les prises de vues stéréo suivant l'ensemble des angles de prise de vue prédéfinis,
- aux fins de reconstruire (60) et de recoudre (80) en 3D une seule représentation de la surface 3D et de la texture de l'objet ou du corps imagé (30).

8. Procédé de reconstruction en 3D d'une boucle complète à 360° de la surface 3D et de la texture associée d'un objet ou d'un corps (30) comprenant les étapes :
- (100-110) de positionnement (100) de l'objet ou du corps (10) sur une table tournante (20), ou de positionnement (110) au centre d'un cadre tournant (21) supportant un ou plusieurs appareils 3D de stéréovision passive (10), de sorte que l'objet ou le corps examiné (30) soit dans le champ d'au moins un appareil 3D de stéréovision passive (10),
- (200-210) de rotation (200) de la table tournante (20) ou de rotation (210) du cadre tournant (21) supportant au moins un appareil 3D de stéréovision passive (10) afin d'adopter une position prédéfinie relative du au moins un appareil 3D de stéréovision passive (10) par rapport à l'objet ou au corps imagé (30),
- (300) de déclanchement du au moins un appareil 3D de stéréovision passive (10),
- (400-410) d'itération (400) de la rotation (200) de la table tournante (20) ou d'itération (410) de la rotation (210) du cadre tournant (21), et du déclanchement (300) de l'appareil 3D (10) afin de recueillir l'ensemble des paires stéréo couvrant un tour complet à 360° de l'objet ou du corps (30),
- (500) de reconstruction en 3D de morceaux de surface 3D et des textures d'images associées de l'objet ou du corps (30) à partir des paires stéréo acquises pour chacune des positions relatives,
**caractérisé par le fait :**
- **qu'**une pause soit observée dans la rotation de la table (20) ou du cadre (21) tournant au moment de chaque prise de vue (300).
- **qu'**il comprend l'étape(600) de couture en une seule représentation de la surface 3D et de la texture d'image associée, ladite couture mettant en correspondance au moyen de critères géométriques dans l'espace 3D les surfaces 3D reconstruites, utilisant un algorithme de bouclage pour que la succession des différentes transformations géométriques entre surfaces 3D successives conduisent à l'identité à la fin du tour complet et ajustant les différentes surfaces en une représentation d'une boucle complète à 360° de l'objet ou du corps imagé (30).

9. Procédé suivant la revendication 8 et **caractérisé par le fait que** la méthode utilise une table tournante (20) de telle sorte qu'un objet ou un corps (30) placé (100) sur cette table tournante (20) se trouve dans le champ de prise de vue du au moins un appareil 3D de stéréovision passive (10) et que les déplacements relatifs (200) entre l'objet ou le corps (30) et le au moins un appareil 3D de stéréovision passive (10) soient réalisés en faisant effectuer un tour complet (400) à la table tournante (20).

10. Procédé suivant la revendication 8 et **caractérisé par le fait que** la méthode utilise un cadre tournant (21) supportant au moins un appareil 3D de stéréovision passive (10) de telle sorte qu'un objet ou un corps (30) placé (110) au centre de rotation de ce cadre tournant (21) se trouve dans le champ de prise de vue du au moins un appareil 3D de stéréovision passive (10) et que les déplacements relatifs (210) entre l'objet ou le corps (30) et le au moins un appareil 3D de stéréovision passive (10) soient réalisés en faisant effectuer un tour complet (410) au cadre tournant (21).

11. Procédé suivant les revendications 8 à 10 et **caractérisé en ce que** l'étape de reconstruction des surfaces 3D (500) soit réalisée à l'intérieur de la boucle d'itération (400-410) juste après le déclanchement (300) de l'appareil 3D (10)

12. Procédé suivant les revendications 8 à et **caractérisé en ce que** l'étape de couture (600) des surfaces 3D soit réalisée au fur et à mesure de la reconstruction des surfaces 3D (500) au sein de la boucle d'itération (400-410).

## Patentansprüche

1. Vorrichtung, die die Rekonstruktion in 3D der Oberfläche einer vollen Umdrehung um 360° eines Gegenstands oder eines Körpers (30) ermöglicht, umfassend:
- mindestens ein passives 3D-Stereovisionsgerät, das mit einer doppelten Optik (10) ausgestattet ist,
- einen Drehtisch (20), auf dem der abzubildende Gegenstand oder Körper (30) oder alternativ ein Rahmen (21) platziert ist, der sich um den abzubildenden Gegenstand oder Körper (30) dreht, an dem das mindestens eine passive 3D-Stereovisionsgerät, das mit einer doppelten Optik (10) ausgestattet ist, angebracht ist, sodass die Positionen des Gegenstands oder des Körpers (30) und des mindestens einen 3D-Gerätes (10) so zueinander sind, dass sich der Gegenstand oder der Körper (30) in dem Aufnahmebereich des mindestens einen 3D-Gerätes (10) befindet,
- ein Mittel zur Drehkontrolle (40) des Drehtisches (20) oder ein Mittel zur Kontrolle (41) des Drehrahmens (21) und ein Mittel zur Kontrolle zur Auslösung der Aufnahmen (50), das es ermöglicht, eine Reihe von anhand des mindestens einen 3D-Gerätes (10) aufgenommenen Stereopaaren zu erfassen, die in ihrer Gesamtheit einen Winkel von 360° um den Gegenstand oder den Körper (30) herum abdecken,
- ein Mittel zum Berechnen (60), das es ermöglicht, Oberflächenteilstücke aus den aufgenommenen Stereopaaren in 3D zu rekonstruieren,
**dadurch gekennzeichnet, dass**:
- das Mittel zur Drehkontrolle (40) des Drehtisches (20) oder das Mittel zur Kontrolle (41) des Drehrahmens (21) bei jeder der Aufnahmen eine Pause in der Drehung vorsieht, und
- sie Mittel zum Berechnen (80) umfasst, die es erlauben, die verschiedenen aufgenommenen 3D-Oberflächenteilstücke zusammenzufügen, indem anhand geometrischer Kriterien im 3D-Raum die rekonstruierten 3D-Oberflächen abgebildet werden, indem ein Schleifenalgorithmus verwendet wird, damit die Folge der verschiedenen geometrischen Transformationen zwischen den aufeinanderfolgenden 3D-Oberflächen am Ende der vollen Umdrehung zur Identität führen, und durch Anpassen der verschiedenen Oberflächen in eine einzige 3D-Darstellung einer vollständigen Schleife um 360° der Oberfläche des Gegenstands oder des Körpers.

2. Vorrichtung nach Anspruch 1 und **dadurch gekennzeichnet, dass** sie einen Drehtisch (20) dergestalt umfasst, dass sich ein Gegenstand oder ein Körper (30), der auf diesem Tisch (20) platziert ist, in dem Aufnahmebereich des mindestens einen 3D-Gerätes (10) befindet, und die Mittel zur Kontrolle (40) es ermöglichen, die Drehung des Drehtisches (20) anzusteuern.

3. Vorrichtung nach Anspruch 1 und **dadurch gekennzeichnet, dass** sie einen Drehrahmen (21) umfasst, der das mindestens eine passive 3D-Stereovisionsgerät (10) trägt, sodass sich ein Gegenstand oder ein Körper (30), der in der Drehmitte dieses Drehrahmens (21) platziert ist, in dem Aufnahmebereich des 3D-Geräts (10) befindet und die Mittel zur Kontrolle (41) es ermöglichen, die Drehung des Drehrahmens (21) anzusteuern.

4. Vorrichtung nach den Ansprüchen 1 bis 3, **dadurch gekennzeichnet, dass** die Vorrichtung mehrere passive 3D-Stereovisionsgeräte umfasst, die mit einer doppelten Optik (10) ausgestattet sind.

5. Vorrichtung nach den Ansprüchen 1 bis 4, **dadurch gekennzeichnet, dass** sie weiter Robotermittel zum Ausrichten und/ oder Verschieben des mindestens einen passiven 3D-Stereovisionsgerätes (10) umfasst.

6. Vorrichtung nach den Ansprüchen 1 bis 5, und **dadurch gekennzeichnet, dass** das Mittel zur Kontrolle (40) des Drehtisches (20) oder das Mittel zur Kontrolle (41) des Drehrahmens (21) mit dem Mittel zur Kontrolle, das die Auslösung der Aufnahmen (50) ansteuert synchronisiert oder in einem Mittel zur Kontrolle (40-50) oder (41-50) zusammengefasst sind, das die Aufnahme der Stereopaare aus unterschiedlichen Winkeln ansteuert und eine volle Umdrehung abdeckt.

7. Vorrichtung nach Anspruch 6, und **dadurch gekennzeichnet, dass** das Mittel zur Kontrolle, das die Kontrolle der Ausrichtung und der Aufnahme (40-50) oder (41-50) ermöglicht, die Möglichkeit zur Vorbestimmung einer bestimmten Anzahl relativer Aufnahmewinkel des oder der passiven Stereovisionsgeräte(s) (10) beinhaltet und den Drehtisch (20) oder den Drehrahmen (21) ansteuert, um für jeden vorbestimmten Aufnahmewinkel:
- den Gegenstand oder den Körper (30) in Bezug auf das oder die passive(n) Stereovisionsgeräte(s) (10) gemäß einem vorbestimmten Aufnahmewinkel zu platzieren,
- das oder die Stereopaar(e) gemäß diesem relativen Aufnahmewinkel aufzunehmen,
- den Gegenstand oder den Körper (30) in Bezug auf das oder die passive(n) Stereovisionsgeräte(s) (10) zu verschieben, um eine andere relative Position einzunehmen,
- und nacheinander Stereoaufnahmen gemäß einer Reihe von vorbestimmten Aufnahmewinkeln zu realisieren,
- zu dem Zweck, um eine einzige Darstellung der 3D-Oberfläche und der Textur des abgebildeten Gegenstands oder Körpers (30) zu rekonstruieren (60) und zusammenzufügen (80).

8. Verfahren zur Rekonstruktion in 3D einer vollen Schleife um 360° der 3D-Oberfläche und der zugehörigen Textur eines Gegenstands oder Körpers (30), umfassend die Schritte:
- (100-110) zum Positionieren (100) des Gegenstands oder Körpers (10) auf einem Drehtisch (20), oder zum Positionieren (110) in der Mitte eines Drehrahmens (21), der ein oder mehrere passive(s) 3D-Stereovisionsgerät(e) (10) trägt, sodass der untersuchte Gegenstand oder Körper (30) im Bereich mindestens eines 3D-Stereovisionsgerätes (10) ist,
- (200-210) zum Drehen (200) des Drehtisches (20) oder zum Drehen (210) des Drehrahmens (21), der mindestens ein passives 3D-Stereovisionsgerät (10) trägt, um eine relative vorbestimmte Position des mindestens einen passiven 3D-Stereovisionsgerätes (10) in Bezug auf den abgebildeten Gegenstand oder Körper (30) einzunehmen,
- (300) zum Auslösen des mindestens einen passiven 3D-Stereovisionsgerätes (10),
- (400-410) zum Wiederholen (400) der Drehung (200) des Drehtisches (20) oder zum Wiederholen (410) der Drehung (210) des Drehrahmens (21), und der Auslösung (300) des 3D-Gerätes (10), um die Gesamtheit der Stereopaare zu erfassen, die eine volle Umdrehung um 360° des Gegenstands oder des Körpers (30) abdecken,
- (500) zum Rekonstruieren in 3D von 3D-Oberflächenteilstücken und Texturen zugehöriger Bilder des Genstands oder Körpers (30) aus den aufgenommenen Stereopaaren für jede der relativen Positionen,
**dadurch gekennzeichnet, dass**:
- in der Drehung des Drehtisches (20) oder des Drehrahmens (21) bei jeder der Aufnahme (300) eine Pause vorgesehen ist.
- es den Schritt (600) des Zusammenfügens in eine einzige Repräsentation der 3D-Oberfläche und der zugehörigen Bildtextur umfasst, wobei das Zusammenfügen anhand geometrischer Kriterien im 3D-Raum die rekonstruierten 3D-Oberflächen unter Verwendung eines Schleifenalgorithmus abbildet, damit die Folge der verschiedenen geometrischen Transformationen zwischen den aufeinanderfolgenden 3D-Oberflächen am Ende der vollen Umdrehung zur Identität führen, und Anpassen der verschiedenen Oberflächen in einer einzigen 3D-Darstellung einer vollständigen Schleife um 360° der Oberfläche des Objekts oder des abgebildeten Körpers (30).

9. Verfahren nach Anspruch 8, und **dadurch gekennzeichnet, dass** das Verfahren einen Drehtisch (20) verwendet, sodass sich ein Gegenstand oder ein Körper (30), der auf diesem Tisch (20) platziert (100) ist, in dem Aufnahmebereich des mindestens einen 3D-Gerätes (10) befindet, und die Verschiebungen (200) zwischen dem Gegenstand oder dem Körper (30) und dem mindestens einen passiven Stereovisionsgerät (10) zueinander durch Ausführen lassen einer vollen Drehung (400) des Drehtisches (20) realisiert werden.

10. Verfahren nach Anspruch 8, und **dadurch gekennzeichnet, dass** das Verfahren einen Drehrahmen (21) verwendet, der mindestens ein passives Stereovisionsgerät (10) trägt, sodass sich ein Gegenstand oder ein Körper (30), der in der Drehmitte dieses Drehrahmens (21) platziert (110) ist, in dem Aufnahmebereich des 3D-Geräts (10) befindet und die Verschiebungen (210) zwischen dem Gegenstand oder dem Körper (30) und dem mindestens einen passiven Stereovisionsgerät (10) zueinander durch Ausführen lassen einer vollen Drehung (410) des Drehrahmens (21) realisiert werden.

11. Verfahren nach den Ansprüchen 8 bis 10, und **dadurch gekennzeichnet, dass** der Schritt zur Rekonstruktion der 3D-Oberflächen (500) innerhalb der Wiederholungsschleife (400-410) unmittelbar nach dem Auslösen (300) des 3D-Gerätes (10) realisiert wird.

12. Verfahren nach den Ansprüchen 8 bis 11 und **dadurch gekennzeichnet, dass** der Schritt des Zusammenfügens (600) der 3D-Oberflächen nach und nach im Laufe der Rekonstruktion der 3D-Oberflächen (500) innerhalb der Wiederholungsschleife (400-410) realisiert wird.

## Claims

1. Device making it possible for the 3D reconstruction of the surface of a complete 360° rotation of an object or of a body (30) comprising:
- at least one 3D passive stereovision device equipped with a double optic (10),
- a rotating table (20) on which is placed the object or the body to be imaged (30) or alternatively a frame (21) rotating around the object or the body to be imaged (30) on which is attached the at least one 3D passive stereovision device equipped with a double optic (10), such that the relative positions of the object or of the body (30) and of the at least one 3D device (10) are such that the object or the body (30) is located in the field of view of the at least one 3D device (10),
- a means for controlling (40) the rotation of the rotating table (20) or a means for controlling (41) the rotating frame (21) and a means for controlling the triggering of shots (50) making it possible to collect a set of stereo pairs acquired by means of the at least one 3D device (10) covering in the set thereof, a 360° angle around the object or the body (30),
- calculation means (60) making it possible to reconstruct, in 3D, pieces of surfaces from stereo pairs acquired,
**characterised by** the fact:
- that means for controlling the rotation (40) of the rotating table (20) or the means for controlling (41) the rotating frame (21) observes a pause in the rotation during each of the shots, and
- that is comprises calculation means (80) making it possible to sew the different 3D surface pieces acquired by connecting, by means of geometric criteria in the 3D space, the reconstructed 3D surfaces, by using a looping algorithm such that the succession of different geometric transformations between successive 3D surfaces lead to the identity at the end of the complete rotation and by adjusting the different surfaces in one single 3D representation of a complete 360° loop of the surface of the object or of the body.

2. Device according to claim 1, and **characterised by** the fact that it comprises a rotating table (20) such that an object or a body (30) placed on this table (20) is located in the field of vision of the at least one 3D device (10) and that the control means (40) make it possible to control the rotation of the rotating table (20).

3. Device according to claim 1, and **characterised by** the fact that it comprises a rotating frame (21) supporting the at least one passive stereovision 3D device (10) such that an object or a body (30) placed at the centre of rotation of this rotating frame (21) is located in the field of view of the 3D device (10) and that the control means (41) make it possible to control the rotation of the rotating frame (21).

4. Device according to claims 1 to 3, **characterised in that** the device comprises several passive stereovision 3D devices, each equipped with a double optic (10).

5. Device according to claims 1 to 4, and **characterised in that** it comprises, in addition, robotised means for orienting and/or moving the at least one passive stereovision 3D device (10).

6. Device according to claims 1 to 5, and **characterised in that** the means for controlling (40) the rotating table (20) or the means for controlling (41) the rotating frame (21) are synchronised or combined with the control means controlling the triggering of the shots (50) in one single control means (40-50) or (41-50) controlling the acquisition of the stereo pairs according to different angles and covering a complete rotation.

7. Device according to claim 6, and **characterised in that** the control means making it possible to control the orientation and the shot (40-50) or (41-50) comprises the possibility of predefining a certain number of relative shot angles of the passive stereovision device(s) (10) and controls the rotating table (20) or the rotating frame (21) in order to, for each predefined shot angle:
- relatively place the object or the body (30) with respect to the passive stereovision 3D device(s) (10) according to one of the predefined shot angles,
- acquire the stereo pair(s) according to this relative shot angle,
- relatively move the object or the body (30) with respect to the passive stereovision 3D device(s) (10) to adopt another relative position,
- and successively take stereo shots according to all the predefined shot angles,
- for the purpose of reconstructing (60) and of sewing (80) in 3D one single representation of the 3D surface and of the texture of the object or of the imaged body (30).

8. Method for reconstructing in 3D, a complete 360° loop of the 3D surface and of the associated texture of an object or of a body (30) comprising steps:
- (100-110) of positioning (100) the object or the body (10) on a rotating table (20), or of positioning (110) at the centre of a rotating frame (21) supporting one or more passive stereovision 3D device(s) (10), such that the object or the body examined (30) is in the field of at least one passive stereovision 3D device (10),
- (200-210) of rotating (200) the rotating table (20) or of rotating (210) the rotating frame (21) supporting at least one passive stereovision 3D device (10) in order to adopt a relative predefined position of the at least one passive stereovision 3D device (10) with respect to the object or to the imaged body (30),
- (300) of triggering the at least one passive stereovision 3D device (10),
- (400-410) of iterating (400) the rotation (200) of the rotating table (20) or of iterating (410) the rotation (210) of the rotating frame (21), and of the triggering (300) of the 3D device (10) in order to collect all the stereo pairs covering a complete 360° rotation of the object or of the body (30),
- (500) of reconstructing in 3D, 3D surface pieces and associated image textures of the object or of the body (30) from stereo pairs acquired for each of the relative positions,
**characterised by** the fact:
- that a pause is observed in the rotation of the table (20) or of the frame (21) rotating at the moment of each shot (300),
- that it comprises the step (600) of sewing in one single representation of the 3D surface and of the associated image texture, said sewing connecting by means of geometric criteria in the 3D space, the reconstructed 3D surfaces, using a looping algorithm such that the succession of different geometric transformations between successive 3D surfaces lead to the identity at the end of the complete rotation and adjusting the different surfaces into a representation of a complete 360° loop of the object or of the imaged body (30).

9. Method according to claim 8, and **characterised by** the fact that the method uses a rotating table (20) such that an object or a body (30) placed (100) on this rotating table (20) is located in the field of view of the at least one passive stereovision 3D device (10) and that the relative movements (200) between the object or the body (30) and the at least one passive stereovision 3D device (10) are achieved by making a complete rotation (400) to the rotating table (20) occur.

10. Method according to claim 8, and **characterised by** the fact that the method uses a rotating frame (21) supporting at least one passive stereovision 3D device (10) such that an object or a body (30) placed (110) at the centre of rotation of this rotating frame (21) is located in the field of vision of the at least one passive stereovision 3D device (10) and that the relative movements (210) between the object or the body (30) and the at least one passive stereovision 3D device (10) are achieved by making a complete rotation (410) to the rotating frame (21) occur.

11. Method according to claims 8 to 10, and **characterised in that** the step of reconstructing 3D surfaces (500) is carried out inside the iteration loop (400-410) just after the triggering (300) of the 3D device (10).

12. Method according to claims 8 to 11, and **characterised in that** the step pf sewing (600) 3D surfaces is carried out as the 3D surfaces (500) are reconstructed within the iteration loop (400-410).
